(19) Europäisches Patentamt
European Patent Office
Office européen des brevets

(11) EP 2 061 254 A2

(12) EUROPEAN PATENT APPLICATION

(43) Date of publication:
20.05.2009 Bulletin 2009/21

(51) Int Cl.:
H04N 7/26 (2006.01)        H04N 7/50 (2006.01)

(21) Application number: 08253000.7

(22) Date of filing: 11.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 14.09.2007  US 855888

(71) Applicants:
• Sony Corporation
Tokyo 108-0075 (JP)

• Sony Electronics, Inc.
Park Ridge, NJ 07656 (US)

(72) Inventors:
• Zhang, Ximin
San Diego, CA 92127-1898 (US)
• Liu, Ming-Chang
San Diego, CA 92127-1898 (US)

(74) Representative: Scaddan, Gareth Casey et al
D Young & Co
120 Holborn
London EC1N 2DY (GB)

(54) **Video coding**

(57)    A coding mode selection method is provided to improve the visual quality of an encoded video sequence. The coding mode is selected based on a human visual tolerance level. Picture data may be received for a video coding process. The picture data is then analyzed to determine human visual tolerance adjustment information. For example, parameters of a cost equation may be adjusted based on the human visual tolerance level, which may be a tolerance that is based on a distortion bound that the human visual system can tolerate. The picture data may be analyzed in places that are considered visually sensitive areas, such as trailing suspicious areas, stripping suspicious areas, picture boundary areas, and/or blocking suspicious areas. Depending on what kind of visually sensitive area is found in the picture data, a parameter in a cost equation may be adjusted based on different visual tolerance thresholds. The coding mode is then determined based on the cost.

Fig. 1

**Description**

**Field of the Invention**

The present invention relates to video coding.

**Background of the Invention**

In video compression, such as in H.264/advance video coding (AVC), coding efficiency is achieved over other coding standards. In AVC, multiple coding tools are provided to improve compression efficiency by encoding a bit stream differently. For example, each coding tool may be represented as one coding mode in a compressed bit stream. Selection of the coding mode focuses on objective rate/distortion (R/D) performance. For example, performance is measured by obtaining a better peak signal-to-noise ratio (PSNR) using the same bit rate or keeping the same PSNR by using less bit rate. Using the R/D approach can significantly improve the compression efficiency. However, what may be objectively efficient may not be considered visually pleasing by a human user. For example, a human eye may be bothered by the distortion in the coded video even though the video was compressed using the objective R/D approach.

**Summary of the Invention**

Various respective aspects and features of the invention are defined in the appended claims. Combinations of features from the dependent claims may be combined with features of the independent claims as appropriate and not merely as explicitly set out in the claims.
In one embodiment of the invention, a coding mode selection method is provided to improve the visual quality of an encoded video sequence. The coding mode is selected based on a human visual tolerance level. Picture data may be received for a video coding process. The picture data is then analyzed to determine human visual tolerance adjustment information. For example, parameters of a cost equation may be adjusted based on the human visual tolerance level, which may be a tolerance that is based on a distortion bound that the human visual system can tolerate.
The picture data may be analyzed in places that are considered visually sensitive areas, such as trailing suspicious areas, stripping suspicious areas, picture boundary areas, and/or blocking suspicious areas. Depending on what kind of visually sensitive area is found in the picture data, a parameter in a cost equation may be adjusted based on different visual tolerance thresholds. Once a parameter in the cost equation is adjusted, a cost for the video coding process is calculated. The coding mode is then determined based on the cost. Accordingly, the coding mode determined is selected using a cost equation that is adjusted based on human visual tolerance levels.

**Brief Description of the Drawings**

Embodiments of the invention will now be described with reference to the accompanying drawings, throughout which like parts are referred to by like references, and in which:

Fig. 1 depicts an example of an encoder according to one embodiment of the invention.

Fig. 2 depicts a more detailed example of encoder according to one embodiment of the invention.

Fig. 3 depicts an example of a trailing artifact detection and visual tolerance parameter adjustment according to one embodiment of the invention.

Fig. 4 depicts an example of a flowchart for detecting stripping artifacts and adjusting visual tolerance parameters according to one embodiment of the invention.

**Description of the Example Embodiments**

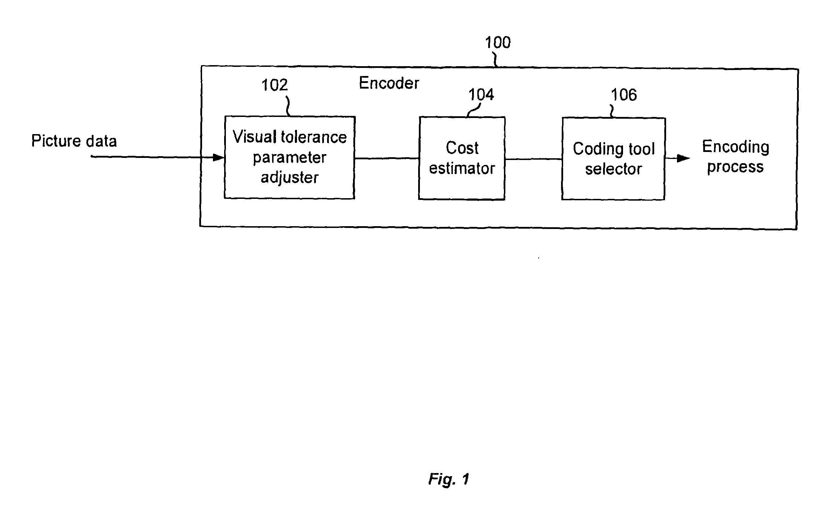

Fig. 1 depicts an example of an encoder 100 according to one embodiment of the invention. Encoder 100 includes a visual tolerance parameter adjuster 102, a cost estimator 104, and a coding tool selector 106.
Picture data may be received and encoded by encoder 100. The picture data may be any data and may be composed of macroblocks. Encoder 100 may encode the macroblocks using a video coding specification. In one embodiment, H.264/AVC is used by encoder 100. Although H.264/AVC is being described, it will be understood that other video coding specifications may be used, such as any Moving Picture Experts Group (MPEG) specifications.
Visual tolerance parameter adjuster 102 may analyze the picture data to determine if parameters in a cost equation should be adjusted. The cost equation may be any metric that is used to determine a coding mode used in the encoding process. For example, any equation that can quantify a value to use to determine which coding mode may be used. As will be described in more detail below, visually sensitive areas, such as trailing suspicious areas, stripping suspicious areas, or picture boundary areas, may be analyzed to determine if parameters in the cost equation should be adjusted. In the analysis, information for the picture data may be compared to a visual tolerance threshold. Depending on the comparison, the parameters may be adjusted.

Cost estimator 104 estimates the coding cost for the encoding process. The cost estimated is used to select a coding mode that will be used to encode the picture data. Encoding the picture data using different coding modes may result in different compression in addition to different visual quality. For example, certain artifacts may result from the encoding process. The artifacts may include trailing artifacts, stripping artifacts, or picture boundary artifacts. These artifacts may be visually annoying to a human visual system (i.e., to a human when he/she views the displayed picture data after decoding of the encoded data). The coding mode used may cause or exacerbate the presence of the artifacts. Accordingly, particular embodiments determine the coding mode to use based on human visual tolerance levels. A human visual tolerance level may be a distortion level that a human visual system is deemed to tolerate. For example, during testing, users are tested to determine a distortion level that can be tolerated. This level is used as a bound for distortion for areas of a picture (macroblock). The human visual tolerance level is used to select a coding tool that leads to distortion that is less than the distortion bound rather than a coding tool that leads to distortion that is larger than the distortion bound. Accordingly, the coding tool that leads to distortion less than the human visual tolerance level is selected and used for coding. This process may lead to the reduction of visual artifacts that result from the encoding process. Although the coding mode may not optimize the rate/distortion in the encoding process, it is expected that the visual experience may be better for a user.

Examples of how visual artifacts may result are first described and then processes for how particular embodiments of the invention select coding modes to minimize the presence of the artifacts will be described. In one example, for each macroblock, the coding cost for a coding mode can be calculated using equation 1:

$$Coding\_\cos t = Distortion(QP) + \lambda(QP)Rate(QP) \qquad (1)$$

In equation (1), QP stands for the quantitization scale and $\lambda$ is a parameter that depends on the quantitization scale. The rate and distortion may also be known and are the bit rate and distortion of the encoding process. The larger the quantitization scale, the larger the value of $\lambda$. The variable $\lambda$ may play an important role for balancing the distortion and bit rate used. For example, considering there are two coding modes, coding mode 1 leads to values of distortion1 and rate1, and coding mode 2 leads to values of distortion2 and rate2, the following equations may be satisfied:

$$Distortion1(QP) = Distortion2(QP) + \lambda(QP)$$

$$Rate1(QP) = Rate2(QP) - 1$$

Thus, coding_cost1 = coding_cost2, which means the coding cost for coding mode 1 equals the coding cost for coding mode 2. In one example, coding mode 1 may always be selected even if it leads to a larger distortion that is $\lambda(QP)$ more than *Distortion2.* If $\lambda(QP)$ is too big, visually annoying artifacts may result. Thus, the parameter $\lambda$ may be adjusted by visual tolerance parameter adjuster 102 if it is determined that the visual tolerance levels indicate a parameter (i.e., $\lambda$) should be adjusted. This may reduce the distortion and lead to less visually annoying artifacts.

In AVC, the intra-coding supports many prediction modes (i.e., prediction directions). Depending on the surrounding conditions, one mode may use fewer bits than the other modes. This mode is called the most probable mode. Based on rate/distortion conventional coding mode selection, equation (2) may be used to calculate the intra coding cost of each mode:

$$Coding\_\cos t(most\_probable\_mod e) = SAD/SATD(most\_probable\_mod e)$$
$$Coding\_\cos t(other\_mod e) = SAD/SATD(other\_mod e) + Bias(QP) \qquad (2)$$

In the above equation, SAD stands for sum of absolute difference and SATD stands for sum of absolute transformed differences. In equation (2), when bias (QP) is big, visually annoying artifacts may result. Thus, visual tolerance parameter adjuster 102 may adjust the bias parameter when it is determined that visual artifacts may result based on visual tolerance thresholds. This may reduce the presence of visually annoying artifacts.

Cost estimator 104 then determines the cost. For example, equation (1) and/or (2) may be used to estimate the cost. Because visual tolerance parameter adjuster 102 may have adjusted the parameters based on the visual tolerance, the cost for each coding mode is based on the human visual tolerance levels. That is, the cost is adjusted such that a coding tool is selected that may provide a distortion level that is less than the human visual tolerance level. Thus, the cost may be different from using an objective rate/distortion method.

Coding tool selector 106 then selects a coding mode. For example, different coding modes may be provided in a video coding process. In one example, in AVC, different coding tools may provide different coding modes. The coding modes may be encoding the picture data using different sizes of sub-block prediction within macroblocks, different prediction directions, or other variations. A person of skill in the art may appreciate different coding modes that may be used.

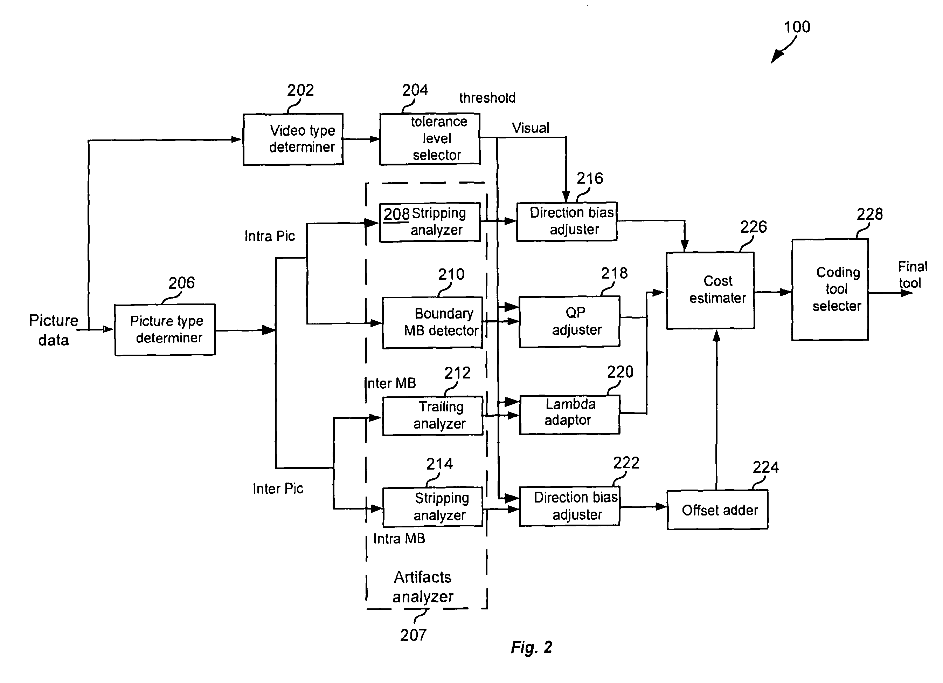

Fig. 2 depicts a more detailed example of encoder 100 according to one embodiment. Different kinds of picture data may be received. In one embodiment, different picture data may be treated differently. For example, animation video sequences and natural video sequences may be processed differently. A video type determiner 202 may analyze the picture data to determine its type. In one embodiment, picture data may be classified as animation or natural video. Although animation and natural video are described, it will be understood that other video types may be appreciated. Depending on the video type, a tolerance level selector 204 selects the visual tolerance level. Different visual tolerance levels may be determined for different video types. In one example, the visual tolerance level of an animation sequence may be lower than the visual tolerance level for a natural video sequence. A lower visual tolerance level means that a human visual system may be more sensitive to any artifacts that result from the encoding process. Based on the visual tolerance level selected, a set of thresholds may be determined. These thresholds may be different for the different visual artifacts that may result.

In addition to determining the video type, a picture type determiner 206 is used to determine the picture type. In one example, the picture type may be determined to be an intra picture or an inter picture. The current picture (e.g., macroblock) may be encoded using intra encoding or inter encoding as is known in the art. The processing may now be referred to as processing macroblocks; however, it will be understood that picture data may be any set of data. A macroblock may be a section of the picture data. If the macroblock is encoded as an intra macroblock, then a different analysis for visually sensitive areas may be used if the current picture is determined to be an inter picture.

Visual artifacts analyzer 207 is configured to analyze a macroblock to determine if the macroblock is susceptible to one or more of the visual artifacts. For intra pictures, a stripping analyzer 208 may determine if the macroblock may be susceptible to stripping artifacts. A boundary macroblock detector 210 may determine if the macroblock is susceptible to a picture boundary artifact. Also, if the picture is determined to be an inter picture, a trailing analyzer 212 is configured to determine if the macroblock is susceptible to trailing artifacts. Also, a stripping analyzer 214 determines if the macroblock is susceptible to stripping artifacts similar to stripping analyzer 208.

Depending on the different analysis performed, different visual tolerance parameters may be adjusted. Stripping analyzer 208 may analyze the macroblock to determine if it is susceptible to stripping artifacts. A stripping artifact may be where a certain unnatural pattern repeats along one direction, which may look like a stripe to a human visual system. If stripping analyzer 208 determines that the macroblock may be susceptible to stripping artifacts, the direction bias(QP) parameter in equation (2) may be adjusted according to a visual tolerance threshold. For example, a direction bias adjuster 216 may receive a visual tolerance threshold from tolerance level selector 204. The bias (QP) parameter may then be adjusted based on the visual tolerance threshold. This process will be described in more detail below.

A boundary macroblock detector 210 analyzes the macroblock to determine if it may be susceptible to picture boundary artifacts. These artifacts may be noticeable along a picture boundary of a picture (e.g., horizontal or vertical black bars of a picture on the top/bottom or sides of a display screen). If boundary macroblock detector 210 determines that the macroblock is detected as a picture boundary macroblock, then a quantitization parameter (QP) adjuster 218 may adjust the quantitization scale based on a visual tolerance threshold. For example, QP adjuster 218 receives a visual tolerance threshold from tolerance level selector 204 and may adjust the quantitization scale based on it.

If the picture is an inter picture, the macroblocks in the picture may be coded as either inter macroblocks or intra macroblocks. For an inter macroblock, a trailing analyzer 212 determines if the macroblock is susceptible to trailing artifacts. Trailing artifacts may be where a certain unnatural moving pattern is observed when a video sequence is displayed. If trailing artifacts may be possible, the $\lambda$ parameter in equation (1) may be adjusted based on a visual tolerance threshold. For example, a $\lambda$ adapter 220 receives a visual tolerance threshold from tolerance level selector 204 and adjusts the $\lambda$ value based on it.

For an intra macroblock, a stripping analyzer 214 determines if the macroblock may be susceptible to stripping artifacts. If so, direction bias adjuster 222 may adjust the parameter bias(QP) based on a visual tolerance threshold. In this case, a visual tolerance threshold may be received from tolerance level selector 204 and the bias is adjusted. Also, an offset adder 224 may add an offset to a prediction cost for each direction if there is a film grain condition existing in the macroblock. That is, each mode that may be used may have an offset added to it such that the cost will be higher for the intra coded film grain macroblock.

A cost estimator 226 then estimates the cost for each coding mode that may be used to encode the macroblock. For example, each coding mode may use equations (1) and/or (2) to calculate a cost. The adjustments to the parameters may be used in estimating the cost. Some of the parameter values are adjusted before the cost calculation is performed. For example, if a macroblock was determined to be susceptible to stripping artifacts, the bias may be adjusted. The other parameters, such as the quantitization parameter and $\lambda$ may not be adjusted. Thus, cost estimator 226 may estimate the cost for each different mode using the adjusted direction bias. Cost estimator 226 then outputs the cost to coding mode selector 228.

Coding mode selector 228 is then configured to select a coding mode. For example, the coding mode that provides the lowest cost may be selected. The macroblock may then be encoded using the selected coding mode.

The following sections will analyze the determination of different visually sensitive areas and show the visual tolerance parameters that are adjusted. The first section analyzes trailing artifacts, the second section analyzes stripping artifacts, and the third section analyzes picture boundary detection.

Trailing Artifacts

In trailing artifacts, the human visual system may observe a certain unnatural pattern moving in inter pictures when a video sequence is displayed. For example, when a flat background, such as a plain black background, is shown and the scene moves, a trailing artifact can be seen as moving in the background. In one example, if there is a dot on the wall, when a sequence of pictures shows movement, a human can see the dot move.

In one embodiment, trailing artifacts are usually caused by the selection of a skip mode or an all-zero co-efficient macroblock. A skip mode is when a copy prediction is used for a macroblock. That is, the same macroblock may be copied or used for another macroblock. Because a flat area has less texture, the possibility of selecting a skip mode and/or an all-zero co-effcient macroblock is very high. Also, a macroblock with a very thin edge is also prone to be affected by trailing artifacts because the macroblock that contains the thin edge is likely to be encoded by skip mode. Any mismatch between the reference macroblock and the current macroblock may cause trailing artifacts. In one example, the quantitization scale may be reduced. However, if skip mode is being used, and the amount is not reduced enough, the artifacts are not removed. Also, if the amount is reduced too much, the cost may be too many bits are used.

Trailing artifacts may be propagated with very small residue error. When inter mode is selected, the prediction error is independent picture by picture. That means intra mode can prevent error propagation. Moreover, due to the nature of inter prediction, a decoded macroblock has a uniform distribution. Thus, the possibility to generate a small trailing artifact-like texture distribution is very small for an intra coded macroblock. Thus, intra mode should be used in the trailing suspicious area in an inter picture. That is, trailing analyzer 212 may be used to determine if a picture may include trailing artifacts.

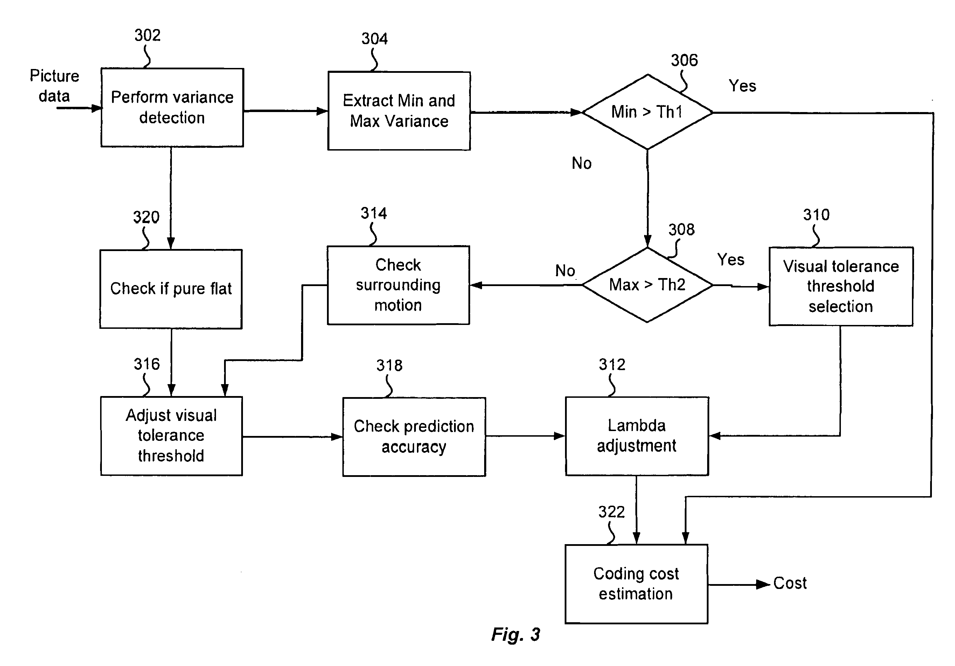

Fig. 3 depicts an example of a trailing artifact detection and visual tolerance parameter adjustment according to one embodiment. In step 302, a variance detection is performed. For example, an 8x8 variance is extracted. The variance may reflect the contrast in the picture.

In step 304, a minimum and maximum variance is extracted from the variance detection. A threshold TH1 is used to determine if trailing artifacts may be likely. In step 306, the minimum variance is compared to a first threshold (TH1). If the minimum variance is greater than the first threshold, it is determined that the possibility of trailing artifacts is very small. Thus, the normal coding cost estimation may be applied using equation (1). Accordingly, a parameter may not be adjusted based on visual tolerance levels in this case.

If the minimum variance is less than or equal to the first threshold, then the current macroblock may be affected by trailing artifacts. In step 308, the maximum variance is then compared to a second threshold (TH2). If the maximum variance is larger than the second threshold, in step 310, a visual tolerance threshold is selected. For example, a visual tolerance threshold may be selected from two pre-generated threshold values that are received from tolerance level selector 204 in Fig. 2. In one example, if the macroblock has a thin edge, a smaller tolerance level is selected. If the current macroblock has a strong edge, a bigger tolerance level is selected. A thin edge may be where the contrast is small along an edge and the strong edge is where there is a sharp difference in contrast along an edge. The motion estimation for the macroblock with strong edge may be more accurate than the macroblock with thin edge. Compared to macroblock with thin edge, it is less possible to have trailing artifacts in strong edge macroblock. Therefore, a different tolerance level is used but does not need to be used.

Then, in step 312, the $\lambda$ parameter in equation (1) may be adjusted based on the visual tolerance threshold selected. For example, $\lambda(QP)$ is compared to a selected visual tolerance threshold. If $\lambda(QP)$ is larger than the selected visual tolerance threshold, then $\lambda(QP)$ is reset as the value of the selected visual tolerance threshold. However, if $\lambda(QP)$

is not greater than the selected visual tolerance threshold, then λ(QP) may be kept unchanged. The value of λ(QP) is reset to the visual tolerance threshold if it is larger than it because this may reduce the existence of trailing artifacts. If the threshold is a distortion bound, then adjusting the value of λ(QP) may lead to a selection of a coding tool that leads to a distortion of less than the distortion bound.

Referring back to step 308, if the maximum variance is not greater than the second threshold, in step 314, a surrounding motion check is performed. The surrounding motion check may check the surrounding macroblocks for motion. For example, macroblocks may have been encoded or decoded before the current macroblock. These macroblocks may be analyzed to determine if any of the surrounding macroblocks have a motion that is larger than a third threshold (TH3) and a 16x16 variance larger than a fourth threshold (TH4). For example, the check is to determine if any surrounding macroblock may be experiencing motion that is greater than a threshold. This indicates that the background may not be flat but is moving. Thus, the possibility of trailing artifacts is higher.

In this case, in step 316, if a surrounding macroblock has a motion larger than threshold TH3 and a variance larger than threshold TH4, a visual tolerance level is adjusted. For example, the following equation may be used to select a tolerance threshold:

$$Tolerance_{INTRA} = V1, Tolerance_{INTER} = V2$$

where V1<V2.

If V1 is not less than V2, then $Tolerance_{INTRA} = Tolerance_{INTER} = V2$. V1 and V2 are two constants that are empirically obtained as the visual threshold.

In step 318, a prediction accuracy check is performed. This checks whether the motion prediction is equal to or less than an original tolerance threshold. If so, then λ(QP) may not be changed in step 312. If the prediction distortion is greater than the visual tolerance level, λ(QP) is compared to the visual tolerance threshold and if it is larger, λ(QP) is reset as the value of the visual tolerance threshold.

Referring back to step 302, the process may also branch off to step 320, where a pure flat check may be performed. A pure flat check checks to see if the variance is equal to zero. This may mean that the background may be pure black. In this case, the human visual system may be able to observe a very small distortion.

In this case, in step 316, the tolerance level may be set to zero, that is tolerance$_{intra}$ may be set to zero. Steps 318 and 312 may then be performed as described above. However, in this case, because the tolerance threshold may be zero, λ(QP) is always set to zero. Because the tolerance threshold is zero, λ(QP) will be greater than the threshold and always set to zero. The chance of having trailing artifacts is high in this case and thus the tolerance threshold is set to zero to lower the chance that trailing artifacts may exist.

After λ(QP) is adjusted in step 312, in step 322, a coding cost estimation is performed. The coding cost estimation is performed using the adjusted λ parameter.

Stripping Artifacts

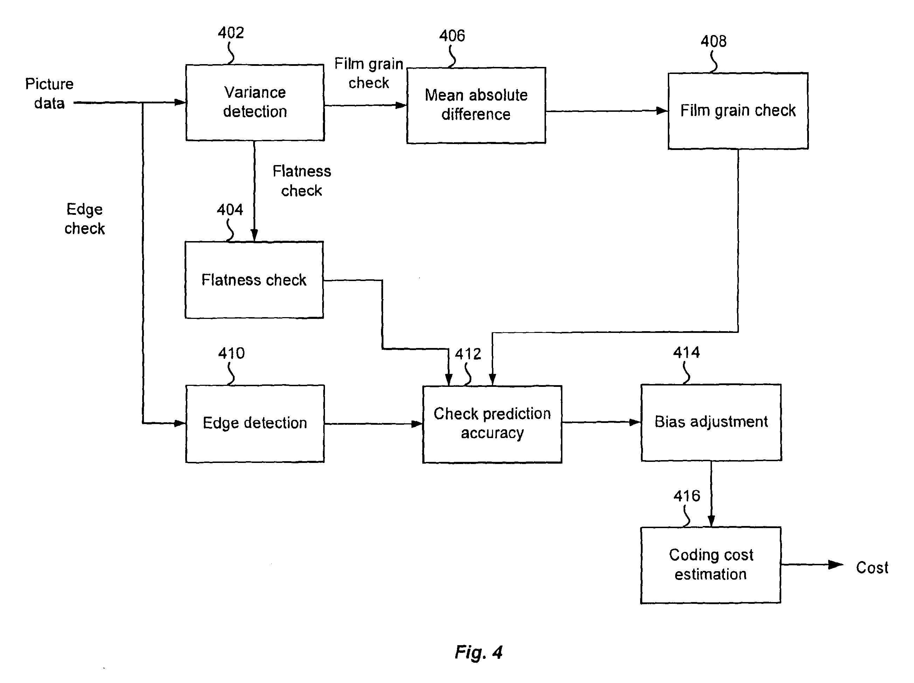

Fig. 4 depicts an example of a flowchart for detecting stripping artifacts and adjusting visual tolerance parameters according to one embodiment. A stripping artifact may occur when a human visual system observes a certain unnatural pattern that repeats itself in one direction. For example, stripes may occur in the horizontal and vertical directions. In one example, a stripping artifact may occur in an I picture and then propagate to the following P and B pictures.

Stripping artifacts may usually occur in a flat area, film grain area, or in a sharp edge in a macroblock. A flat area may be an area that is one color, such as black. A film grain area may be an area that is grainy and includes a large number of dots. An edge may be where an edge is included in the macroblock, such as one part may be black and the other part may be a different color, such as a lighter color.

The stripping artifacts may be caused by an unsuitable intra coding mode selection. In a flat area, each prediction direction (coding mode) may have a similar prediction distortion (SAD/SATD). Conventional R/D-based methods are strongly biased to the most probable mode. Thus, the same coding mode may be repeated along one direction. If the prediction is not perfect and the quantitization cannot reproduce residue, the same pattern will be repeated along one direction. Also, stripping artifacts may also occur on a film grain area or sharp edge area if the quantitization scale is not very small. For example, in a sharp edge area, if one part of the macroblock is solid black and the other part is not, some black may leak over the edge into the other area. Also, in a film grain area, grainy patterns may become striped if the quantitization is not small enough.

Fig. 4 depicts a flowchart 400 for stripping artifacts processing according to one embodiment. In Fig. 4, each macroblock is checked to determine if it is a flat macroblock, film grain macroblock or edge macroblock. If it is any of these three macroblocks, then the prediction accuracy may be checked and the parameter bias (QP) may be adjusted.

If the macroblock does not belong to any of the three, the parameter bias (QP) may be kept unchanged.

In step 402, a macroblock variance detection is performed. If there is a small variance, then it may be determined that the macroblock is flat. Thus, in step 404, a flatness check is performed. If the macroblock is flat, the prediction accuracy is checked in step 412. This process will be described below.

A film grain check may also be performed. In step 406, a macroblock mean absolute difference (MAD) detection is performed to calculate the MAD. In step 408, a film grain condition check is performed. In this case, if the 16x16 variance is less than a first threshold (F1) and larger than a second threshold (F2), then a macroblock mean absolute difference (MAD) condition check is performed. If the variance is not within the two thresholds, then the macroblock is not considered a film grain macroblock.

A condition is checked for the mean absolute difference of the current macroblock. In one example, the following equation may be used to determine if the macroblock is a film grain macroblock:

$$ MB\_Var \Big/ MB\_Mad < ((MB\_Mad + c1) >> 8) + c2 $$

MB_Var is the macroblock variance, MB_Mad is the MAD for the macroblock, and c1 and c2 are constants. If the left side of the equation is greater than the right side, then the current macroblock is not considered a film grain macroblock. Although this film grain macroblock detection method is provided, it will be understood that other detection methods may be used. If the macroblock is considered a film grain macroblock, the process proceeds to step 412 where a prediction accuracy check is performed.

Edge detection will now be described. In step 410, edge detection is performed. In this case, if an edge is detected in a macroblock, then the macroblock is determined to be an edge macroblock. Thus, the proceeds to step 412.

If the macroblock is considered a flat, film grain, or edge macroblock, in step 412, a prediction accuracy check is performed. If the prediction distortion (SAD/SATD) is less than a visual tolerance threshold, then this indicates that bias (QP) should be adjusted in step 414. If the prediction distortion is larger than the visual threshold, then it is possible stripping artifacts may result. In step 414, the parameter bias(QP) is compared to the visual tolerance threshold. The visual tolerance level may be different depending on whether the macroblock is considered a flat, film grain, or edge macroblock. If it is larger than the visual tolerance threshold, it is reset to that visual tolerance threshold. If it is not larger, the bias(QP) is left alone.

In step 416, the coding cost is estimated using the adjusted bias (QP). The coding cost may be different depending on what type the macroblock is considered.

Picture Boundary

The picture boundary artifact detection will now be described. In many video sequences, especially in movie sequences, there are stripe-like black boundaries along the side or top/bottom of each picture. Although they do not contain any information, encoder 100 has to encode them and treat them as sharp edges. If the area along the sharp edge boundary is smooth, a vertical mode may be the best intra mode for the left and right boundary; and a horizontal mode is always the best intra mode for the upper and lower boundary. At a low bit rate, it is possible that the lower macroblock copies the exact same pattern from its upper macroblock for the vertical strip and the right macroblock copies the exact same pattern from the left macroblock in the horizontal strip. In this case, the human visual system may observe the difference between the boundary macroblock and its neighbor macroblock. (To avoid picture boundary artifacts problem, a picture boundary macroblock may be detected and the quantitization scale may be reduced. This may reduce visually annoying artifacts that may result from encoding.

For each macroblock row in a picture, the first N left macroblocks starting from the left side of the picture are checked. N may be an integer constant that is less than 4. In step 503, the 8x8 variance of each 8x8 block is calculated and a minimum and maximum variance is extracted.

For the first selected macroblock, if the maximum 8x8 variance is larger than a big threshold (B1) and the minimum 8x8 variance is less than a small threshold (S1), it is determined to be a boundary macroblock. This is because the variance indicates that part of the macroblock is flat and part has high contrast (e.g., a non-black stripe). A macroblock in the right side of the picture and a center symmetrical macroblock to the detected macroblock may also be checked. If they meet these criteria, then they may be noted as boundary macroblocks also. All of the other macroblocks in the current row may be denoted as non-boundary macroblocks.

If the maximum 8x8 variance of the first macroblock is less than threshold B1, then the next N-1 macroblock is checked using the same procedure as described above until a boundary macroblock is detected or all the macroblocks in the current row are checked.

If all the N left macroblocks are not boundary macroblocks, the N right macroblocks are checked from the right side of the picture. For each right macroblock if the maximum 8x8 variance is larger than a big threshold B2 and a minimum 8x8 variance is less than a small threshold S2, it is determined to be a boundary macroblock. All of the other macroblocks in the current row are denoted as non-boundary macroblocks.

If the maximum 8x8 variance of the first macroblock is less than threshold B1, then the next N-1 right macroblock is checked using the procedure stated in step 510 until a boundary macroblock is detected or all of the N right macroblocks are checked. The following procedure may be performed until all rows are checked.

The detection of horizontal strips (upper and lower boundary macroblocks) can be performed using the above procedure. For detected boundary macroblocks, if intra DC mode is not selected and the intra prediction cost (SAD/SATD) is larger than the threshold the current quantitization scale is compared to a visual tolerance threshold value, such as a quantitization parameter value. If the current quantitization scale is larger than the quantitization parameter value, then the current macroblock uses a visual tolerance threshold as the pre-selected quantitization parameter value as a quantitization scale. If the quantitization scale is not larger than the visual tolerance threshold, the quantitization scale is not changed.

The quality of the boundary macroblock may be improved such that no artifacts can be observed if the quantitization scale is larger than the pre-selected quantitization parameter value is changed to be the pre-selected quantitization parameter. If the quantitization scale is less than the pre-selected quantitization parameter, then it is expected that no artifacts may be observed.

Accordingly, particular embodiments detect visually sensitive areas and adjust the coding mode based on human visual tolerance levels. This leads to picture sequences that include less visually annoying artifacts. Accordingly, the viewing experience may be more pleasant for a user.

Although the description has been described with respect to particular embodiments thereof, these particular embodiments are merely illustrative, and not restrictive. Although H.264/AVC is described, other coding specifications may be used.

Any suitable programming language can be used to implement the routines of particular embodiments including C, C++, Java, assembly language, etc. Different programming techniques can be employed such as procedural or object oriented. The routines can execute on a single processing device or multiple processors. Although the steps, operations, or computations may be presented in a specific order, this order may be changed in different particular embodiments. In some particular embodiments, multiple steps shown as sequential in this specification can be performed at the same time.

A "computer-readable medium" for purposes of particular embodiments may be any medium that can contain, store, communicate, propagate, or transport the program for use by or in connection with the instruction execution system, apparatus, system, or device. The computer readable medium can be, by way of example only but not by limitation, an electronic, magnetic, optical, electromagnetic, infrared, or semiconductor system, apparatus, system, device, propagation medium, or computer memory. Particular embodiments can be implemented in the form of control logic in software or hardware or a combination of both. The control logic, when executed by one or more processors, may be operable to perform that which is described in particular embodiments.

Particular embodiments of the invention may be implemented by using a programmed general purpose digital computer, by using application specific integrated circuits, programmable logic devices, field programmable gate arrays, optical, chemical, biological, quantum or nanoengineered systems, components and mechanisms may be used. In general, the functions of particular embodiments of the invention can be achieved by any means as is known in the art. Distributed, networked systems, components, and/or circuits can be used. Communication, or transfer, of data may be wired, wireless, or by any other means.

It will also be appreciated that one or more of the elements depicted in the drawings/figures can also be implemented in a more separated or integrated manner, or even removed or rendered as inoperable in certain cases, as is useful in accordance with a particular application. It is also within the scope to implement a program or code that can be stored in a machine-readable medium to permit a computer to perform any of the methods described above.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

Thus, while particular embodiments of the invention have been described herein, a latitude of modification, various changes and substitutions are intended in the foregoing disclosures, and it will be appreciated that in some instances some features of particular embodiments will be employed without a corresponding use of other features without departing from the scope and spirit as set forth. Therefore, many modifications may be made to adapt a particular situation or material to the essential scope and spirit.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Various further aspects and features of the present invention are set out in the following numbered clauses:

**CLAUSES**

1. An apparatus configured to select a coding tool for a video coding process, the apparatus comprising:

one or more processors; and

logic encoded in one or more tangible media for execution by the one or more processors and when executed operable to:

receive picture data for the video coding process;
analyze the picture data to determine human visual tolerance adjustment information, the human visual tolerance information determined based on a human's visual tolerance level to visual artifacts that may occur in the video coding process;
select a coding tool based on the human visual tolerance adjustment information.

2. The apparatus of clause 1, wherein the logic when executed is further operable to calculate a cost for the video coding process based on the human visual tolerance adjustment information, wherein selecting the coding tool is based on the calculated cost.

3. The apparatus of clause 2, wherein the parameter adjusted is a bias(QP) parameter in an equation:

$$Coding\_\cos t(other\_\mathrm{mod}e) = SAD/SATD(other\_\mathrm{mod}e) + Bias(QP)$$

where SAD is a sum of absolute difference and SATD is a sum of absolute transformed differences.

4. The apparatus of clause 1, wherein logic operable to analyze the picture data comprises logic when executed that is further operable to determine if a visually sensitive area exists in the picture data.

5. The apparatus of clause 4, wherein logic operable to analyze the picture data comprises logic when executed that is further operable to perform an analysis to determine if stripping artifacts suspicious area, trailing artifacts suspicious, picture boundary area, and/or a blocking suspicious area exist.

6. The apparatus of clause 1, wherein the logic when executed is further operable to detect when a visual artifact that may occur in the coding process with the picture data, wherein the human visual tolerance information is determined based on the detected visual artifact.

7. The apparatus of clause 6, wherein different human visual tolerance adjustment information is determined based on a distortion bound.

**Claims**

1. A method for selecting a coding tool for a video coding process, the method comprising:

receiving picture data for the video coding process;
analyzing the picture data to determine human visual tolerance adjustment information, the human visual tolerance information determined based on a human's visual tolerance level to visual artifacts that may occur in the video coding process;
selecting a coding tool based on the human visual tolerance adjustment information.

2. The method of claim 1, further comprising calculating a cost for the video coding process based on the human visual tolerance adjustment information, wherein selecting the coding tool is based on the calculated cost.

3. The method of claim 2, further comprising adjusting a parameter in a cost estimation used to determine the cost based on the human visual tolerance information.

4. The method of claim 3, wherein the parameter is adjusted based on a visual threshold.

5. The method of claim 2, wherein the parameter adjusted comprises a λ(QP) parameter in an equation:

$$Coding\_\cos t = Distortion(QP) + \lambda(QP)Rate(QP)$$

where QP stands for a quantitization scale and λ is a parameter that depends on the quantitization scale, distortion is a distortion of the coding process and rate is a bit rate of the coding process.

6. The method of claim 2, wherein the parameter adjusted is a bias(QP) parameter in an equation:

$$Coding\_\cos t(other\_\text{mod}e) = SAD/SATD(other\_\text{mod}e) + Bias(QP)$$

where SAD is a sum of absolute difference and SATD is a sum of absolute transformed differences.

7. The method of claim 1, wherein analyzing the picture data comprises determining if a visually sensitive area exists in the picture data.

8. The method of claim 7, wherein analyzing the picture data comprises performing an analysis to determine if stripping artifacts suspicious area, trailing artifacts suspicious, picture boundary area, and/or a blocking suspicious area exist.

9. The method of claim 1, further comprising detecting when a visual artifact that may occur in the coding process with the picture data, wherein the human visual tolerance information is determined based on the detected visual artifact.

10. The method of claim 9, wherein different human visual tolerance adjustment information is determined based on a distortion bound.

11. An apparatus configured to select a coding tool for a video coding process, the apparatus comprising:

   one or more processors; and
   logic encoded in one or more tangible media for execution by the one or more processors and when executed operable to:

      receive picture data for the video coding process;
      analyze the picture data to determine human visual tolerance adjustment information, the human visual tolerance information determined based on a human's visual tolerance level to visual artifacts that may occur in the video coding process;
      select a coding tool based on the human visual tolerance adjustment information.

12. The apparatus of claim 11, wherein the logic when executed is further operable to calculate a cost for the video coding process based on the human visual tolerance adjustment information, wherein selecting the coding tool is based on the calculated cost.

13. The apparatus of claim 12, wherein the logic when executed is further operable to adjust a parameter in a cost estimation used to determine the cost based on the human visual tolerance information.

14. The apparatus of claim 13, wherein the parameter is adjusted based on a visual threshold.

15. The apparatus of claim 12, wherein the parameter adjusted comprises a λ(QP) parameter in an equation:

$$Coding\_\cos t = Distortion(QP) + \lambda(QP)Rate(QP)$$

where QP stands for a quantitization scale and $\lambda$ is a parameter that depends on the quantitization scale, distortion is a distortion of the coding process and rate is a bit rate of the coding process.

$$Coding\_\cos t = Distortion(QP) + \lambda(QP)Rate(QP)$$

100

Encoder

102

Picture data

| Visual tolerance parameter adjuster | 104 Cost estimator | 106 Coding tool selector | Encoding process |

*Fig. 1*

Fig. 2

Fig. 3

EP 2 061 254 A2

*Fig. 4*